# EUROPEAN PATENT APPLICATION

(11) **EP 4 556 875 A1**
(43) Date of publication of application: **21.05.2025**
(21) Application number: 23839281.5
(22) Date of filing: 12.05.2023
(51) Int. Cl.: G01M 11/00

(54) **METHOD AND DEVICE FOR MEASURING OPTICAL CHARACTERISTICS OF MULTI-CORE OPTICAL FIBER**

(30) Priority: 11.07.2022 JP 2022111087
(71) Applicant: SUMITOMO ELECTRIC INDUSTRIES, LTD., Osaka-shi, Osaka 541-0041 (JP)
(72) Inventor: TAKANO, Junya, Osaka-shi, Osaka 541-0041 (JP); HAYASHI, Tetsuya, Osaka-shi, Osaka 541-0041 (JP)
(74) Representative: TBK
(86) International application number: PCT/JP2023/017969
(87) International publication number: WO 2024/014103

(57) **Abstract**

This method for measuring the optical characteristics of a multi-core optical fiber includes: a step for connecting, to a first end face of the multi-core optical fiber, a first optical fiber having the same diameter as a multi-core optical fiber and connected to a light source, and connecting, to a second end face of the multi-core optical fiber, a second optical fiber having the same diameter as the multi-core optical fiber and connected to a measuring instrument; and a step for irradiating the first end face with measurement light emitted from the light source via the first optical fiber, and measuring light emitted from the second end face with the measuring instrument via the second optical fiber. The step for connecting includes a step for aligning the rotational angle of the first end face, a step for aligning the rotational angle of a first connection end face, a step for abutting and connecting the aligned first end face and first connection end face, and a step for abutting and connecting the second end face and a second connection end face.

## Description

### TECHNICAL FIELD

The present disclosure relates to a measuring method and a measuring device of optical characteristics of a multi-core optical fiber.

### BACKGROUND ART

In recent years, in order to cope with the remarkable development of information communication technology and the rapid increase of data traffic accompanying the development, expansion of communication capacity in an optical communication network has been demanded. However, in an optical communication network using a conventional single mode fiber (SMF), it is expected that the communication capacity thereof reaches the limit due to the nonlinear Shannon limit or the fiber fuse limit. As a method for overcoming this limitation, a multi-core optical fiber (MCF), which is a kind of space division multiplexing (SDM) transmission system, is expected. Unlike conventional SMF which has only one core in a single optical fiber, MCF has a plurality of cores within a single optical fiber. Thus, when evaluating the optical characteristics of the MCF, it is necessary to measure each plurality of cores, and the measurement time increases, and therefore, it is necessary to establish efficient measuring methods.

Patent literature 1 describes a method of measuring optical characteristics of each core of the MCF using a fan-in/fan-out (FIFO) device. The FIFO device can easily measure the optical characteristics of each core of the MCF without using an alignment machine.

### CITATION LIST

### PATENT LITERATURE

Patent literature 1: Japanese Unexamined Patent Application Publication No. 2015-1673

### SUMMARY OF INVENTION

A method of measuring an optical characteristic of a MCF according to an aspect of the present disclosure includes connecting a first optical fiber having a diameter equal to a diameter of the MCF and connected to a light source to a first end surface of the MCF, and connecting a second optical fiber having a diameter equal to the diameter of the MCF and connected to a measuring instrument to a second end surface of the MCF; and irradiating the first end surface with measurement light emitted from the light source via the first optical fiber, and measuring light emitted from the second end surface with the measuring instrument via the second optical fiber. The connecting includes holding the MCF and aligning a rotation angle of the first end surface by using a first rotational fiber holder, holding the first optical fiber and aligning a rotation angle of a first connection end surface of the first optical fiber to be connected to the first end surface by using a second rotational fiber holder, making the first rotational fiber holder and the second rotational fiber holder face each other, and butt-coupling the aligned first end surface and the aligned first connection end surface, and butt-coupling the second end surface and a second connection end surface of the second optical fiber to be connected to the second end surface.

### BRIEF DESCRIPTION OF THE DRAWINGS

FIG. 1 is a configuration diagram showing a measuring device of optical characteristics of an MCF according to a first embodiment.
FIG. 2 is a cross-sectional view of the MCF.
FIG. 3 is a flowchart showing a measuring method of optical characteristics of the MCF according to the first embodiment.
FIG. 4 is an explanatory diagram of a first alignment step using an end-surface observation device.
FIG. 5 is an explanatory diagram of a first alignment step using an end-surface observation device according to modification.
FIG. 6 is an explanatory diagram of a first connection step using a connection portion.
FIG. 7 is a configuration diagram showing a measuring device for optical characteristics of the MCF according to a second embodiment.
FIG. 8 is a plan view showing the end surface of the MCF and the connection end surface of the MMF.
FIG. 9 is a configuration diagram showing a measuring device for optical characteristics of the MCF according to a third embodiment.
FIG. 10 is a plan view showing the end surface of the MCF and the connection end surface of the eccentric MMF.
FIG. 11 is a configuration diagram showing a measuring device for optical characteristics of the MCF according to a fourth embodiment.
FIG. 12 is a configuration diagram showing a measuring device for optical characteristics of the MCF according to a fifth embodiment.

### DETAILED DESCRIPTION

### [Problems to be Solved by Present Disclosure]

In the above-described measuring method of the optical characteristics of the MCF using the FIFO device, it is necessary to align and fuse the MCF to be measured and the dummy MCF with the FIFO device by using an MCF-compliant fusion splicer. When the MCF-compatible fusion splicer is used, it takes time to perform the operation from the alignment to the fusion, and the measurement time increases.

The present disclosure aims to provide a measuring method and a measuring device of optical characteristics of the MCF, which can be performed in a short time and in a simple manner.

### [Advantageous Effects of Present Disclosure]

According to the present disclosure, it is possible to provide a measuring method and a measuring device of optical characteristics of the MCF, which can be performed in a short time and in a simple manner.

### [Description of embodiments of the present disclosure]

First, embodiments of the present disclosure will be listed and described. (1) A method of measuring an optical characteristic of a MCF according to an aspect of the present disclosure includes connecting a first optical fiber having a diameter equal to a diameter of the MCF and connected to a light source to a first end surface of the MCF, and connecting a second optical fiber having a diameter equal to the diameter of the MCF and connected to a measuring instrument to a second end surface of the MCF; and irradiating the first end surface with measurement light emitted from the light source via the first optical fiber, and measuring light emitted from the second end surface with the measuring instrument via the second optical fiber. The connecting includes holding the MCF and aligning a rotation angle of the first end surface by using a first rotational fiber holder, holding the first optical fiber and aligning a rotation angle of a first connection end surface of the first optical fiber to be connected to the first end surface by using a second rotational fiber holder, making the first rotational fiber holder and the second rotational fiber holder face each other, and butt-coupling the aligned first end surface and the aligned first connection end surface, and butt-coupling the second end surface and a second connection end surface of the second optical fiber to be connected to the second end surface. In this measuring method, the optical characteristics of the MCF can be measured in a short time and in a simple manner.

(2) In the measuring method of (1), the aligning the rotation angle of the first end surface and the aligning the rotation angle of the first connection end surface each may be performed based on end-surface observation using a camera. In this case, the rotational rough alignment can be easily performed.

(3) In the measuring method of (2), the end-surface observation of the first end surface may be performed by making light emitted from a first light source for the end-surface observation incident on a side surface of the MCF. The end-surface observation of the first connection end surface may be performed by making light emitted from a second light source for the end-surface observation incident on a side surface of the first optical fiber. In this case, end-surface observation can be performed with a simpler configuration than in the case of using a coaxial incident light source.

(4) In the measuring method of (3), the MCF may include a glass fiber and a light-transmissive coating resin coating an outer peripheral surface of the glass fiber. In this case, light can be reliably incident from the side surface.

(5) In the measuring method of (2), the end-surface observation of the first end surface may be performed by making light emitted from a first coaxial incident light source for the end-surface observation disposed between the first end surface and the camera incident on the first end surface. The end-surface observation of the first connection end surface may be performed by making light emitted from a second coaxial incident light source for the end-surface observation disposed between the first connection end surface and the camera incident on the first connection end surface. In this case, the flexibility of the arrangement location of the light source is increased.

(6) In the measuring method of (5), the MCF may include a glass fiber and a light-shielding coating resin coating an outer peripheral surface of the glass fiber. In this case, the coaxial incident light method is particularly effective.

(7) In the measuring method according to any one of (2) to (6), the camera may be an image-processing support camera configured to calculate rotation angles of the MCF and the first optical fiber. In this case, the precision alignment is not required.

(8) In the measuring method according to any one of (1) to (6), the connecting may further include precisely aligning the first end surface and the first connection end surface by the first rotational fiber holder or the second rotational fiber holder after the butt-coupling the first end surface and the first connection end surface. In this case, the connection loss can be reduced.

(9) In the measuring method according to any one of (1) to (8), the butt-coupling may be performed by using a V-groove or a capillary filled with a refractive index matching agent. In this case, the splice loss can be reduced.

(10) In the measuring method according to any one of (1) to (9), the connecting may further include holding the MCF and aligning a rotation angle of the second end surface by using a third rotational fiber holder, and holding the second optical fiber and aligning a rotation angle of the second connection end surface by using a fourth rotational fiber holder. The butt-coupling the second end surface and the second connection end surface may be performed by making the third rotational fiber holder and the fourth rotational fiber holder face each other in a state in which the second end surface has been aligned and the second connection end surface has been aligned. **In** this case, the optical characteristics of the MCF can be measured in a shorter time and in a simpler manner.

(11) In the measuring method according to any one of (1) to (9), the second optical fiber may be a single-core optical fiber including a core having a diameter equal to or more than a diameter of a circumcircle of a plurality of cores of the MCF. In this case, the second end surface and the second connection end surface can be connected without rotational alignment.

(12) In the measuring method according to any one of (1) to (9), the first optical fiber may be a single-core optical fiber. A distance between a central axis of the first optical fiber and a central axis of a core of the first optical fiber may be equal to a distance between a central axis of the MCF and a central axis of each core of the MCF. In this case, the core of the first optical fiber and each core of the MCF can be connected by rotational alignment with the first end surface and the first connection end surface.

(13) A measuring device of an optical characteristic of a MCF according to an aspect of the present disclosure includes a light source configured to make measurement light incident on a first end surface of the MCF via a first optical fiber having a diameter equal to a diameter of the MCF; a measuring instrument configured to measure light emitted from a second end surface of the MCF via a second optical fiber having a diameter equal to the diameter of the MCF; a first rotational fiber holder configured to hold the MCF and rotationally align the first end surface of the MCF; a second rotational fiber holder configured to hold the first optical fiber and rotationally align a first connection end surface of the first optical fiber to be connected to the MCF; a first connection portion configured to butt-couple the first end surface rotationally aligned by the first rotational fiber holder and the first connection end surface rotationally aligned by the second rotational fiber holder; and a second connection portion configured to butt-couple the second end surface of the MCF and the second optical fiber. The measuring device can measure the optical characteristics of the MCF in a short time and in a simple manner.

(14) A method of measuring an optical characteristic of a MCF according to another aspect of the present disclosure includes connecting a single-core optical fiber having a diameter equal to a diameter of the MCF and connected to a light source to a first end surface of the MCF, and connecting an optical fiber having a diameter equal to the diameter of the MCF and connected to a measuring instrument to a second end surface of the MCF; and irradiating the first end surface with measurement light emitted from the light source via the single-core optical fiber, and measuring light emitted from the second end surface with the measuring instrument via the optical fiber. In the connecting, the single-core optical fiber is connected to the MCF such that a core of the single-core optical fiber covers an entire core of a measurement target of the MCF at the first end surface. In this measuring method, the optical characteristics of the MCF can be measured in a short time and in a simple manner.

### [Details of Embodiments of Present Disclosure]

Specific examples of the measuring method and the measuring device of the optical characteristics of the MCF of the present disclosure will be described below with reference to the drawings. It is noted that, the present invention is not limited to these examples, but is defined by the scope of the claims, and is intended to include all modifications within the meaning and scope equivalent to the scope of the claims. In the description of the drawings, the same elements are denoted by the same reference numerals, and redundant description will be omitted.

### (First Embodiment)

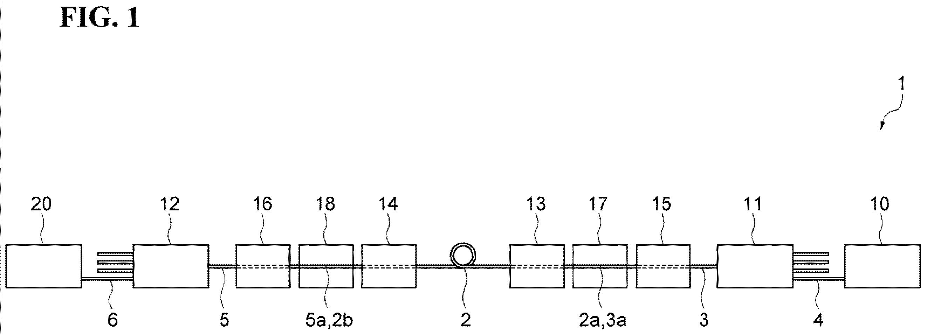

FIG. 1 is a configuration diagram showing a measuring device of optical characteristics of an MCF according to a first embodiment. As shown in FIG. 1, a measuring device 1 according to the first embodiment is a device for measuring an optical characteristic of an MCF 2 to be measured. Measuring device 1 includes a light source 10 that incidents measuring light to an end surface 2a (first end surface) of MCF 2 and a measuring instrument 20 that measures light emitted from an end surface 2b (second end surface) of MCF 2. End surface 2a is one end surface in the longitudinal direction of MCF 2. End surface 2b is the other end surface in the longitudinal direction of MCF 2.

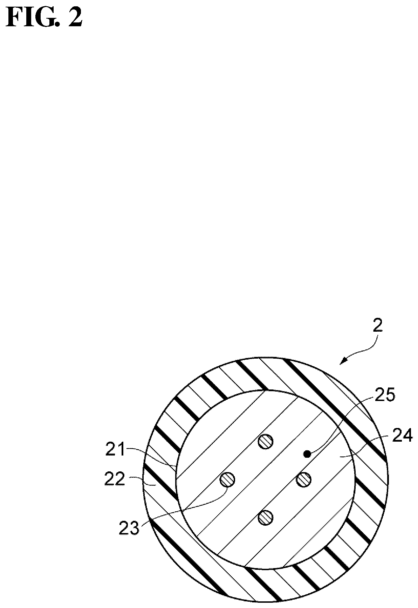

FIG. 2 is a cross-sectional view of the MCF. As shown in FIG. 2, MCF 2 includes a glass fiber 21 and a light-transmissive coating resin 22 that covers the outer peripheral surface of glass fiber 21. Glass fiber 21 includes a plurality of cores 23, cladding 24, and a marker 25. The plurality of cores 23 are arranged at equal intervals on a concentric circle centered on the central axis of MCF 2 in a cross section orthogonal to the central axis of MCF 2. Cladding 24 is a common cladding surrounding the plurality of cores 23 and marker 25. Marker 25 has a refractive index different from that of cladding 24. Marker 25 are arranged at positions where the symmetry of the arrangement of the plurality of cores 23 is broken.

MCF 2 is, for example, a square four-core MCF and includes four cores 23. Coating resin 22 is, for example, a transparent resin or a colored resin. Coating resin 22 is not provided at both ends of glass fiber 21 in the longitudinal direction.

As shown in FIG. 1, measuring device 1 includes FIFO devices 11 and 12, rotational fiber holders 13, 14, 15 and 16 and connection portions 17 and 18. FIFO device 11 includes an MCF 3 and a plurality of SMF 4 connected to each of cores of MCF 3. MCF 3 (first optical fiber) is an optical fiber having a diameter equal to a diameter of MCF 2, and includes a connection end surface 3a connected to end surface 2a. MCF 3 is a dummy MCF. Among the plurality of SMF 4, SMF 4 corresponding to core 23 of a measurement target is connected to light source 10 one by one. FIFO device 12 includes an MCF 5 and the plurality of SMF 6 connected to each of cores of MCF 5. MCF 5 (second optical fiber) is an optical fiber having a diameter equal to a diameter of MCF 2, and includes a connection end surface 5a connected to end surface 2b. MCF 5 is a dummy MCF. Among the plurality of SMF 6, SMF 6 corresponding to core 23 of a measurement target is connected to measuring instrument 20 one by one.

Rotational fiber holders 13,14,15 and 16 has a function of rotatably holding the optical fiber and holding the rotational state of the optical fiber at an arbitrary rotation angle. Rotational fiber holders 13 and 14 holds MCF 2. Rotational fiber holder 13 (first rotational fiber holder) holds, for example, a portion of MCF 2 near end surface 2a and rotationally aligns end surface 2a. Rotational fiber holder 14 holds, for example, a portion of MCF 2 near end surface 2b and rotationally aligns end surface 2b.

Rotational fiber holder 15 (second rotational fiber holder) holds MCF 3 of FIFO device 11. Rotational fiber holder 15 holds, for example, a portion of MCF 3 near connection end surface 3a, and rotationally aligns connection end surface 3a (first connection end surface). Rotational fiber holder 16 holds MCF 5 of FIFO device 12. Rotational fiber holder 16 holds, for example, a portion of MCF 5 near connection end surface 5a (second connection end surface), and rotationally aligns connection end surface 5a.

Each connection portions 17 and 18 are, for example, a V-groove (V-groove substrate) filled with a refractive index matching agent. Connection portion 17 butt-couples end surface 2a of MCF 2 rotationally aligned by rotational fiber holder 13 and connection end surface 3a of MCF 3 rotationally aligned by rotational fiber holder 15. Connection portion 18 butt-couples (V-groove couples) end surface 2b of MCF 2 rotationally aligned by rotational fiber holder 14 and connection end surface 5a of MCF 5 rotationally aligned by rotational fiber holder 16. The refractive index matching agent is, for example, a matching oil. The refractive index matching agent reduces connection loss.

Each of connection portions 17 and 18 may be a capillary filled with the refractive index matching agent. The maximum manufacturing error of the inner diameter of the capillary is set to, for example, a value within the bare fiber diameter (that is, the diameter of glass fiber 21) + 1 µm. Silica glass (SiO₂) or zirconium oxide (ZrO₂) can be used as the material of the capillary.

In the measurement of the optical characteristics of MCF 2 using measuring device 1, measuring light emitted from light source 10 is incident on end surface 2a of MCF 2 via SMF 4 and MCF 3 of FIFO device 11. The light that has passed through MCF 2 and is emitted from end surface 2b of MCF 2 is incident on measuring instrument 20 via MCF 5 and SMF 6 of FIFO device 12, and is measured by measuring instrument 20.

In measuring device 1, when MCF 2 of a measurement target is replaced, for example, MCF 2 is removed together with rotational fiber holders 13 and 14. Removed MCF 2 may be moved to another measuring device 1 together with rotational fiber holders 13 and 14, and another optical characteristic may be measured. MCF 2 newly attached to measuring device 1 may be moved to measuring device 1 together with rotational fiber holders 13 and 14, and the optical characteristics may be measured. Since FIFO devices 11 and 12 are not moved, the alignment of connection end surfaces 3a and 5a may not be performed for the second and subsequent times.

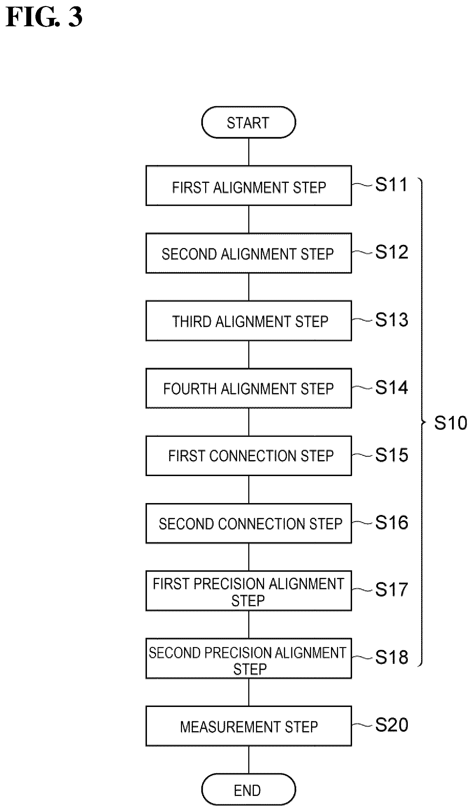

FIG. 3 is a flowchart showing a measuring method of optical characteristics of the MCF according to the first embodiment. As shown in FIG. 3, the measuring method according to the first embodiment includes a connection step S10 and a measurement step S20. The connection step S10 is a step of connecting connection end surface 3a of MCF 3 of FIFO device 11 to end surface 2a of MCF 2 and connecting connection end surface 5a of MCF 5 of FIFO device 12 to end surface 2b of MCF 2. The measurement step S20 is a step of irradiating end surface 2a with measuring light from light source 10 via SMF 4 and MCF 3 of FIFO device 11 and measuring the light emitted from end surface 2b with measuring instrument 20 via MCF 5 and SMF 6 of FIFO device 12.

The connection step S10 includes a first alignment step S11, a second alignment step S12, a third alignment step S13, a fourth alignment step S14, a first connection step S15, a second connection step S16, a first precision alignment step S17, and a second precision alignment step S18.

The first alignment step S11 is a step of holding MCF 2 by using rotational fiber holder 13 and aligning the rotation angle of end surface 2a. The second alignment step S12 is a step of holding MCF 3 by using rotational fiber holder 15 and aligning the rotation angle of connection end surface 3a of MCF 3. The third alignment step S13 is a step of holding MCF 2 by using rotational fiber holder 14 and aligning the rotation angle of end surface 2b. The fourth alignment step S14 is a step of holding MCF 5 by using rotational fiber holder 16 and aligning the rotation angle of connection end surface 5a of MCF 5.

In each of the alignment steps S12, S13, and S14, alignment of the rotation angles of end surface 2a, connection end surface 3a, end surface 2b, and connection end surface 5a are performed based on end-surface observation using a camera. Each of the alignment steps S12, S13, and S14 are steps of, for example, performing coarse alignment (rotational rough alignment) of a rotation angle. In the rotational rough alignment, the rotational alignment between MCF 2 and MCF 3 and 5 is not perfect, but sufficient alignment accuracy can be obtained only by performing the optical characteristic measurement of each core 23 of MCF 2. When the accuracy of the rotational rough alignment is insufficient, it is also possible to perform precise rotational alignment by rotational adjustment of rotational fiber holders 13, 14, 15 and 16 in a subsequent step.

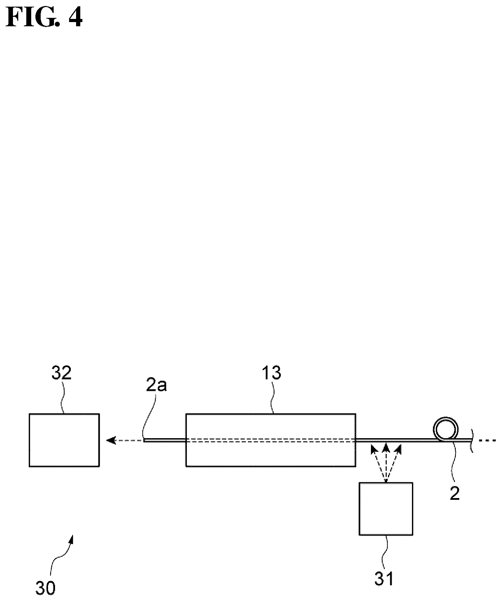

FIG. 4 is an explanatory diagram of a first alignment step using an end-surface observation device. An end-surface observation device 30 shown in FIG. 4 is used to observe each of the end surfaces of end surface 2a, end surface 2b, and connection end surfaces 3a and 5a in each of the alignment steps S11, S12, S13, and S14. FIG. 4 shows a case where the end-surface observation device 30 is used for the first alignment step S11 as an example. End-surface observation device 30 includes a light source 31 and a camera 32. The alignment steps S11, S12, S13, and S14 will be described below. It is noted that, the alignment steps S11, S12, S13, and S14 may be performed using one end-surface observation device 30, or the alignment steps S11, S12, S13, and S14 may be performed using different end-surface observation devices 30.

In the case of the first alignment step S11, end-surface observation device 30 further includes rotational fiber holder 13. MCF 2 is equipped inside rotational fiber holder 13. Light source 31 (first light source for end-surface observation) is equipped at a side of MCF 2 and irradiates light onto a side surface of MCF 2. Light is laterally incident from light source 31 through coating resin 22 of MCF 2. Camera 32 is equipped at a position facing end surface 2a. Camera 32 receives light that has passed through MCF 2 and is emitted from end surface 2a. That is, the end-surface observation of end surface 2a is performed by using light source 31 for end-surface observation and by making light incident from the side surface of MCF 2. In other words, the end-surface observation of end surface 2a is performed by making the light emitted from light source 31 for end-surface observation incident on the side surface of MCF 2.

In the case of the second alignment step S12, end-surface observation device 30 further includes rotational fiber holder 15. MCF 3 is equipped inside rotational fiber holder 15. Light source 31 (second light source for end-surface observation) is equipped at a side of MCF 3 and irradiates light onto a side surface of MCF 3. Light is laterally incident from light source 31 through the coating resin of MCF 3. Camera 32 is equipped at a position facing connection end surface 3a. Camera 32 receives light that has passed through MCF 3 and is emitted from connection end surface 3a. That is, the end-surface observation of connection end surface 3a is performed by using light source 31 for end-surface observation and by making light incident from the side surface of MCF 3. In other words, the end-surface observation of connection end surface 3a is performed by making light emitted from light source 31 for end-surface observation incident on the side surface of MCF 3.

In the case of the third alignment step S13, end-surface observation device 30 further includes rotational fiber holder 14. MCF 2 is equipped inside rotational fiber holder 14. Light source 31 is equipped at a side of MCF 2 and irradiates light onto a side surface of MCF 2. Light is laterally incident from light source 31 through the coating resin 22 of MCF 2. Camera 32 is equipped at a position facing end surface 2b. Camera 32 receives light that has passed through MCF 2 and is emitted from end surface 2b. That is, the end-surface observation of end surface 2b is performed by using light source 31 for end-surface observation and by making light incident from the side surface of MCF 2. **In** other words, the end-surface observation of end surface 2b is performed by making the light emitted from light source 31 for end-surface observation incident on the side surface of MCF 2.

In the case of the fourth alignment step S14, end-surface observation device 30 further includes rotational fiber holder 16. MCF 5 is equipped inside rotational fiber holder 16. Light source 31 is equipped at a side of MCF 5 and irradiates light onto a side surface of MCF 5. Light is laterally incident from light source 31 through the coating resin of MCF 5. Camera 32 is equipped at a position facing connection end surface 5a. Camera 32 receives light that has passed through MCF 5 and is emitted from connection end surface 5a. That is, the end-surface observation of connection end surface 5a is performed by using light source 31 for end-surface observation and by making light incident from the side surface of MCF 5.

Camera 32 may be, for example, an image-processing support camera that calculates the rotation angles of end surface 2a, end surface 2b, connection end surface 3a, and connection end surface 5a. In this case, since precise rotational alignment is not required in the subsequent step, the measurement time can be further shortened. End-surface observation device 30 may further include a suction stage or a V-groove capable of vacuum suction in order to fix the observation end surface during observation with camera 32.

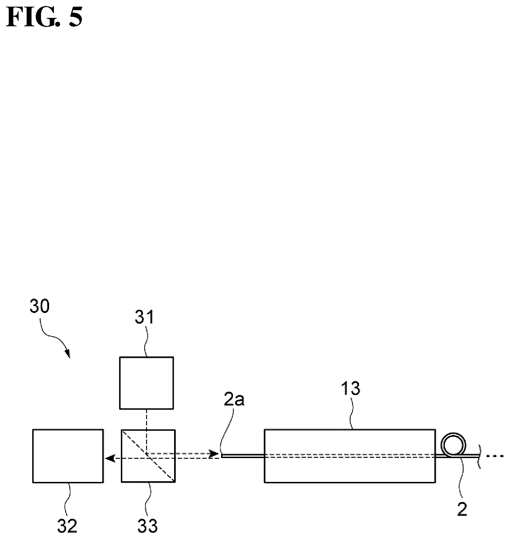

FIG. 5 is an explanatory diagram of a first alignment step using an end-surface observation device according to modification. An end-surface observation device 30A according to the modification shown in FIG. 5 further includes an optical component 33 formed of a beam splitter or a half mirror. Optical component 33 is disposed on a camera observation axis connecting the center of the observation end surface (that is, each end surface of end surface 2a, end surface 2b, and connection end surfaces 3a and 5a) and the center of camera 32. Light source 31 is disposed between the observation end surface and camera 32, and irradiates light onto optical component 33 from a direction perpendicular to the camera observation axis. Optical component 33 reflects the light irradiated from light source 31 and makes the light incident on the observation end surface in parallel with the camera observation axis. Camera 32 receives light reflected by the observation end surface and transmitted through optical component 33.

That is, in each of the alignment steps S11, S12, S13, and S14, the end-surface observation of end surface 2a, end surface 2b, and connection end surfaces 3a and 5a are performed by making light incident on each observation end surface in a coaxial incident light method using light source 31 (first coaxial incident light source and second coaxial incident light source) which is a coaxial incident light source for end-surface observation disposed between the observation end surface and camera 32. In other words, the end-surface observation of end surface 2a, end surface 2b, and connection end surfaces 3a and 5a are performed by making light emitted from light source 31, which is a coaxial incident light source for end-surface observation, incident on each observation end surface. In the coaxial incident light method, since light is incident from the observation end surface, coating resin 22 of MCF 2 may be light-shielding. Similarly, the coating resin of MCF3, 5 may be light-shielding.

After the alignment steps S11, S12, S13, and S14 are performed in this way, the rotational state of rotational fiber holders 13, 14, 15 and 16 are fixed, and MCF 2, 3 and 5 are moved to a place where the connection steps S15 and S16 are performed together with rotational fiber holders 13, 14, 15 and 16 while MCF 2, 3 and 5 are held by rotational fiber holders 13, 14, 15, and 16.

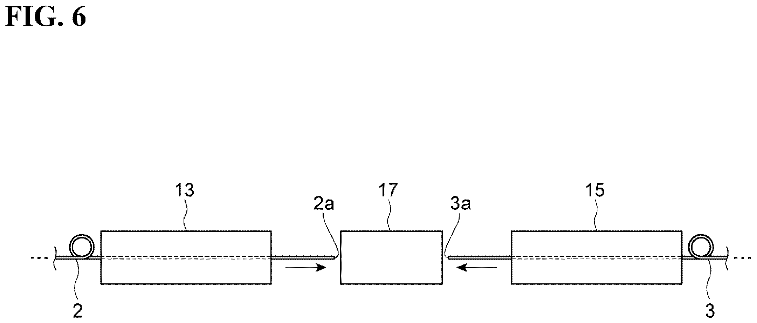

FIG. 6 is an explanatory diagram of a first connection step using a connection portion. As shown in FIG. 6, the first connection step S15 includes a step of making rotational fiber holder 13 and rotational fiber holder 15 face each other and butt-coupling aligned end surface 2a and connection end surface 3a by using connection portion 17. At this time, connection portion 17 and rotational fiber holders 13 and 15 constitute a fiber butt-coupling device. The first connection step S15 further includes a step of connecting SMF 4 corresponding to core 23 of a measurement target among the plurality of SMF 4 of FIFO device 11 to light source 10.

Although not shown, the second connection step S16 includes a step of butt-coupling end surface 2b and connection end surface 5a by using connection portion 18. In the embodiment, the butt-coupling between end surface 2b and connection end surface 5a is performed by making rotational fiber holder 14 and rotational fiber holder 16 face each other in a state which has been aligned. That is, the second connection step S16 is a step of opposing rotational fiber holder 14 and rotational fiber holder 16 to each other and butt-coupling respective aligned end surface 2b and connection end surface 5a. At this time, connection portion 18 and rotational fiber holders 14 and 16 constitute a fiber butt-coupling device. The second connection step S16 further includes a step of connecting SMF 6 corresponding to core 23 of a measurement target among the plurality of SMF 6 of FIFO device 12 to measuring instrument 20.

The first precision alignment step S17 is a step of precisely aligning between end surface 2a and connection end surface 3a by fine rotation adjustment of rotational fiber holder 13 or rotational fiber holder 15 after the first connection step S15. The first precision alignment step S17 is performed when the rotational rough alignment accuracy between end surface 2a and connection end surface 3a is low and the optical coupling is insufficient. The state of the optical coupling can be confirmed by irradiating measuring light from light source 10 and measuring the light with measuring instrument 20.

The second precision alignment step S18 is a step of precisely aligning between end surface 2b and connection end surface 5a by fine rotation adjustment of rotational fiber holder 14 or rotational fiber holder 16 after the second connection step S16. The second precision alignment step S18 is performed when the rotational rough alignment accuracy between end surface 2b and connection end surface 5a is low and the optical coupling is insufficient. The state of the optical coupling can be confirmed by irradiating measuring light from light source 10 and measuring the light with measuring instrument 20.

Since rough rotational alignment (rotational rough alignment) has already been performed in each alignment steps S11, S12, S13, and S14, each precision alignment steps S17 and S18 are substantially unnecessary or can be performed very easily and in a short time. Thus, MCF 2 and MCF 3, 5 can be easily connected. Thus, the optical characteristics of each core 23 of MCF 2 can be easily measured using FIFO devices 11 and 12.

In the measuring method according to the first embodiment, the optical characteristics of all cores 23 can be measured while easily changing core 23 of a measurement target by FIFO devices 11, 12. Specifically, core 23 can be changed only by connecting SMF 4 connected to light source 10 and SMF 6 connected to measuring instrument 20 to SMF 4 and 6 corresponding to core 23 of a next measurement target.

### (Second Embodiment)

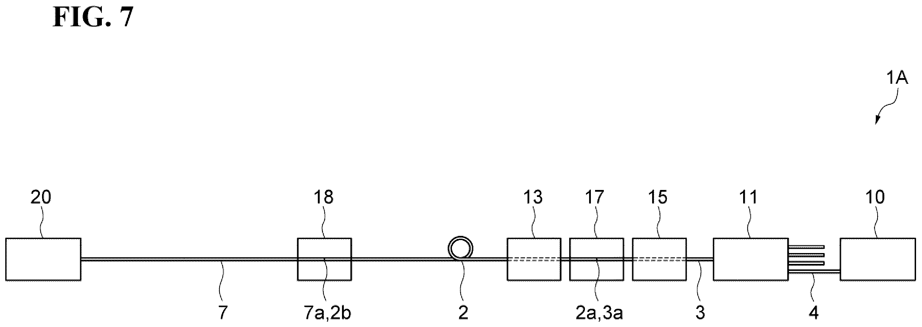

FIG. 7 is a configuration diagram showing a measuring device for optical characteristics of the MCF according to the second embodiment. A measuring device 1A according to the second embodiment shown in FIG. 7 will be described focusing on differences from measuring device 1. Measuring device 1A includes a multimode fiber (MMF) 7 connected to measuring instrument 20 instead of FIFO device 12. Measuring device 1A does not include FIFO device 12 and rotational fiber holders 14 and 16. MMF 7 (second optical fiber) is an optical fiber having a diameter equal to a diameter of MCF 2, and includes a connection end surface 7a (second connection end surface) connected to end surface 2b of MCF 2. MMF 7 is a dummy fiber. Connection portion 18 butt-couples end surface 2b of MCF 2 and connection end surface 7a of MMF 7.

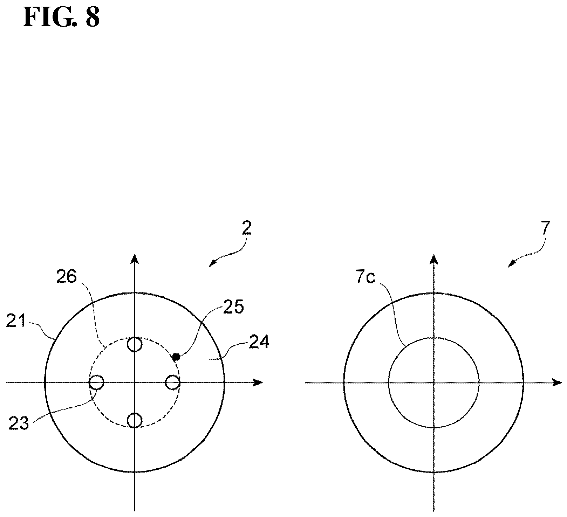

FIG. 8 is a plan view showing the end surface of the MCF and the connection end surface of the MMF. FIG. 8 shows a circumcircle 26 of the plurality of cores 23 arranged on the outermost side in end surface 2b of MCF 2 in a virtual manner. MMF 7 is a single-core optical fiber, and includes a large-diameter core 7c capable of receiving light from all cores 23 of MCF 2. Core 7c has a core diameter equal to or larger than the diameter of circumcircle 26. That is, the diameter (core diameter) of core 7c is equal to or larger than the diameter of circumcircle 26. Thus, end surface 2b and connection end surface 7a can be connected without rotational alignment.

The measuring method according to the second embodiment is different from the measuring method according to the first embodiment in that the third alignment step S13, the fourth alignment step S14, and the second precision alignment step S18 are not included. Further, in the second connection step S16, end surface 2b and connection end surface 7a which are not aligned are butt-coupled to each other, and end surface of MMF 7 on the opposite side to connection end surface 7a is connected to measuring instrument 20.

The measuring method according to the second embodiment can be used for measurement in which the optical fiber on the receiving side (measuring instrument 20 side) can be set to a multimode, for example, like the cutback method. In the cut-back method, after MCF 2 is cut, the cut end surface needs to be reconnected to the connection end surface of the dummy fiber. Although the reconnection can be performed by the measuring method according to the first embodiment, the third alignment step S13 is required once again, and thus the measurement time increases accordingly. In the measuring method according to the second embodiment, when end surface 2b which is the cut end surface is reconnected, the rotational alignment of end surface 2b is not required, and the measurement can be performed only by the butt-coupling operation, and thus the measurement time is shortened.

In the measuring method according to the second embodiment, when core 23 of a measurement target is changed, SMF 4 connected to light source 10 may be simply connected to SMF 4 corresponding to core 23 of a next measurement target.

### (Third Embodiment)

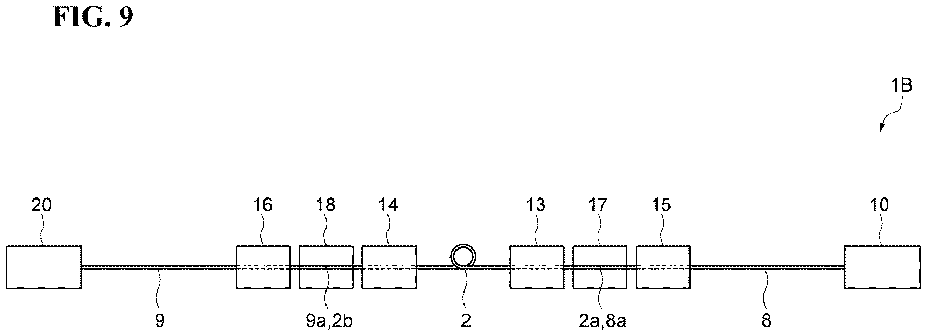

FIG. 9 is a configuration diagram showing a measuring device for optical characteristics of an MCF according to the third embodiment. A measuring device 1B according to the third embodiment shown in FIG. 9 will be described focusing on differences from measuring device 1. Measuring device 1B includes an eccentric MMF 8 connected to light source 10 instead of FIFO device 11 and an eccentric MMF 9 connected to measuring instrument 20 instead of FIFO device 12. Eccentric MMF 8 (first optical fiber) is an optical fiber having a diameter equal to a diameter of MCF 2, and includes a connection end surface 8a (first connection end surface) connected to end surface 2a of MCF 2. Eccentric MMF 8 is a dummy fiber. Eccentric MMF 9 (second optical fiber) is an optical fiber having a diameter equal to a diameter of MCF 2, and has a connection end surface 9a (second connection end surface) connected to end surface 2b of MCF 2. Eccentric MMF 9 is a dummy fiber.

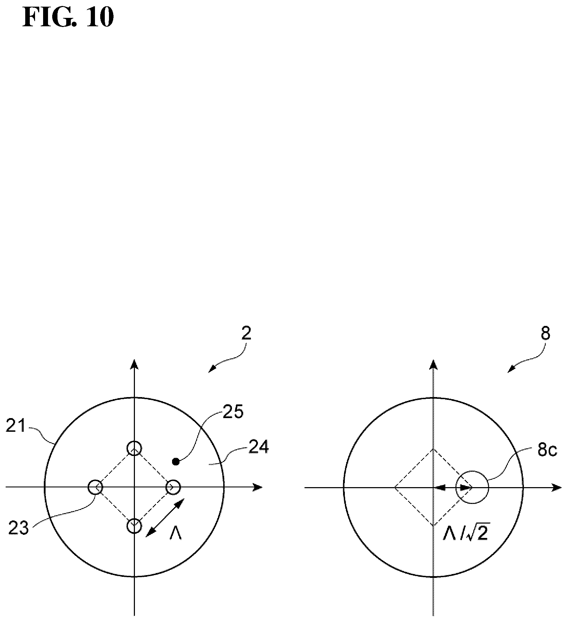

FIG. 10 is a plan view showing the end surface of the MCF and the connection end surface of the eccentric MMF. As shown in FIG. 10, eccentric MMF 8 is a single-core optical fiber, and includes a core 8c provided at a position eccentric from the central axis of eccentric MMF 8. The distance between the central axis of eccentric MMF 8 and the central axis of core 8c is equal to the distance between the central axis of MCF 2 and the central axis of each core 23. Core 8c can receive light from each core 23 of MCF 2. When the core pitch in the case where MCF 2 is a square four-core MCF is A, the distance between the central axis of eccentric MMF 8 and the central axis of core 8c is d1, and the distance between the central axis of MCF 2 and the central axis of each core 23 is d2, d1 = d2 = Λ/√ 2 is satisfied. That is, in eccentric MMF 8, the core center is eccentric from the fiber center by Λ/√ 2. Although not shown, eccentric MMF 9 has the same configuration as eccentric MMF 8.

The measuring method according to the third embodiment is used for, for example, cutoff wavelength measurement. In the normal cutoff wavelength measurement of the SMF, the dummy fibers connected to both ends of the fiber to be measured are MMF for multi-mode excitation. In the case of the MCF, when an MM-MCF capable of guiding light in a multimode is prepared as a dummy fiber, the cutoff wavelength can be measured independently for each core. On the other hand, in the MM-MCF, due to its structure, the inter-core crosstalk increases due to the enlargement of the core diameter, which adversely affects the measurement result, and thus, the use of the FIFO device may not be suitable for the measurement of the cutoff wavelength.

The measuring method according to the third embodiment does not use the FIFO device, and thus inter-core crosstalk is reduced. In the measuring method according to the third embodiment, when core 23 of a measurement target is changed, eccentric MMF 8 and 9 needs to be rotationally aligned and reconnected to end surfaces 2a and 2b. That is, by performing all the steps of the connection step S10 and the measurement step S20 the same number of times as the number of cores 23 of MCF 2, the optical characteristics of each core 23 of MCF 2 can be measured.

### (Fourth Embodiment)

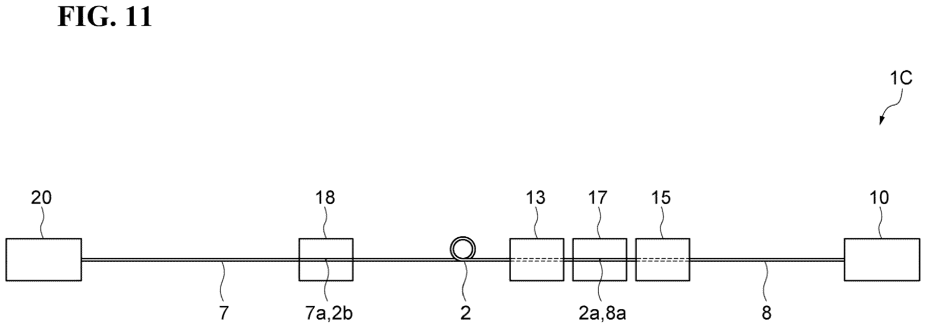

FIG. 11 is a configuration diagram showing a measuring device for optical characteristics of an MCF according to the fourth embodiment. A measuring device 1C according to the fourth embodiment shown in FIG. 11 will be described focusing on the differences from measuring device 1B. Measuring device 1C includes MMF 7 (second optical fiber) used also in the measuring method according to the second embodiment, instead of eccentric MMF 9. Measuring device 1C does not include rotational fiber holders 14 and 16. As in the measuring method according to the second embodiment, MMF 7 capable of receiving light of all cores 23 is used as the dummy fiber on the receiving side (measuring instrument 20 side), and thus, the rotational alignment is not required on the receiving side, and the measurement can be performed only by the butt-coupling operation, and thus, the measurement time is shortened.

### (Fifth Embodiment)

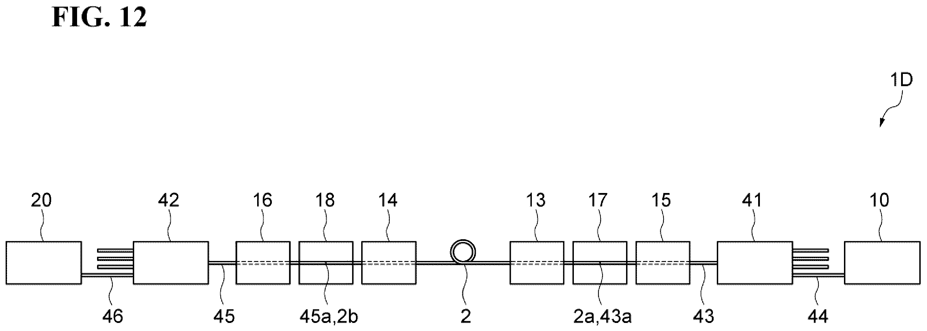

FIG. 12 is a configuration diagram showing a measuring device for optical characteristics of an MCF according to the fifth embodiment. A measuring device 1D according to the fifth embodiment shown in FIG. 12 will be described focusing on differences from measuring device 1. Measuring device 1D includes an FIFO device 41 used instead of FIFO devices 11, 12 and an FIFO device 42 used instead of FIFO device 12. FIFO device 41 includes an MM-MCF 43 (first optical fiber) including a connection end surface 43a (first connection end surface) connected to end surface 2a and a plurality of MMF 44 connected to light source 10. FIFO device 42 includes an MM-MCF 45 (second optical fiber) including a connection end surface 45a (second connection end surface) connected to end surface 2b and a plurality of MMF 46 connected to measuring instrument 20. Measuring device 1D is used for, for example, cutoff wavelength measurement.

While the embodiments have been described, the present disclosure is not necessarily limited to the above-described embodiments and modifications, and various changes can be made without departing from the scope of the present disclosure. The above embodiments and modifications may be combined as appropriate.

The third embodiment has been described by way of an example in which the distance between the central axis of eccentric MMF 8, which is a single-core optical fiber, and the central axis of core 8c is equal to the distance between the central axis of MCF 2 and the central axis of each core 23, but the present invention is not limited thereto. In the first connection step S15, eccentric MMF 8 may be connected to MCF 2 so that the central axis of core 8c coincides with the central axis of core 23 of a measurement target, but eccentric MMF 8 may not be connected so that the central axis of core 8c coincides with the central axis of core 23 of a measurement target. The optical characteristic of eccentric MMF 8 can be measured when eccentric MMF 8 is connected to MCF 2 so that core 8c includes core 23 of a measurement target. That is, in the first connection step S15, eccentric MMF 8 may be connected to MCF 2 so that core 8c covers entire core 23 of a measurement target on end surface 2a. At this time, FIFO device 12 may be connected to measuring instrument 20 as in the first embodiment, or MMF 7 may be connected to measuring instrument 20 as in the second embodiment. The optical characteristics of the MCF can be measured in a short time and in a simple manner by any combination of measuring methods.

### REFERENCE SIGNS LIST

1, 1A, 1B, 1C, 1D measuring device
2 MCF
2a end surface (first end surface)
2b end surface (second end surface)
3 MCF (first optical fiber)
3a connection end surface (first connection end surface)
4 SMF
5 MCF
5a connection end surface (second connection end surface)
6 SMF
7 second optical fiber (MMF)
7a connection end surface (second connection end surface)
7c core
8 eccentric MMF (first optical fiber)
8a connection end surface (first connection end surface)
8c core
9 eccentric MMF (second optical fiber)
9a connection end surface (second connection end surface)
10 light source
11, 12 FIFO device
13 rotational fiber holder (first rotational fiber holder)
14 rotational fiber holder (third rotational fiber holder)
15 rotational fiber holder (second rotational fiber holder)
16 rotational fiber holder (fourth rotational fiber holder)
17, 18 connection portion
20 measuring instrument
21 glass fiber
22 coating resin
23 core
24 cladding
25 marker
26 circumcircle
30, 30A end-surface observation device
31 light source (first light source for end-surface observation, second light source for end-surface observation, first coaxial incident light source, and second coaxial incident light source)
32 camera
33 optical component
41, 42 FIFO device
43 MM-MCF
43a connection end surface
44 MMF
45 MM-MCF
45a connection end surface
46 MMF

## Claims

1. A method of measuring an optical characteristic of a multi-core optical fiber, the method comprising:
connecting a first optical fiber having a diameter equal to a diameter of the multi-core optical fiber and connected to a light source to a first end surface of the multi-core optical fiber, and connecting a second optical fiber having a diameter equal to the diameter of the multi-core optical fiber and connected to a measuring instrument to a second end surface of the multi-core optical fiber; and
irradiating the first end surface with measurement light emitted from the light source via the first optical fiber, and measuring light emitted from the second end surface with the measuring instrument via the second optical fiber,
wherein the connecting includes
holding the multi-core optical fiber and aligning a rotation angle of the first end surface by using a first rotational fiber holder,
holding the first optical fiber and aligning a rotation angle of a first connection end surface of the first optical fiber to be connected to the first end surface by using a second rotational fiber holder,
making the first rotational fiber holder and the second rotational fiber holder face each other, and butt-coupling the aligned first end surface and the aligned first connection end surface, and
butt-coupling the second end surface and a second connection end surface of the second optical fiber to be connected to the second end surface.

2. The method of measuring the optical characteristic of the multi-core optical fiber according to claim 1,
wherein the aligning the rotation angle of the first end surface and the aligning the rotation angle of the first connection end surface each are performed based on end-surface observation using a camera.

3. The method of measuring the optical characteristic of the multi-core optical fiber according to claim 2,
wherein the end-surface observation of the first end surface is performed by making light emitted from a first light source for the end-surface observation incident on a side surface of the multi-core optical fiber, and
wherein the end-surface observation of the first connection end surface is performed by making light emitted from a second light source for the end-surface observation incident on a side surface of the first optical fiber.

4. The method of measuring the optical characteristic of the multi-core optical fiber according to claim 3, wherein the multi-core optical fiber includes a glass fiber and a light-transmissive coating resin coating an outer peripheral surface of the glass fiber.

5. The method of measuring the optical characteristic of the multi-core optical fiber according to claim 2,
wherein the end-surface observation of the first end surface is performed by making light emitted from a first coaxial incident light source for the end-surface observation disposed between the first end surface and the camera incident on the first end surface, and
wherein the end-surface observation of the first connection end surface is performed by making light emitted from a second coaxial incident light source for the end-surface observation disposed between the first connection end surface and the camera incident on the first connection end surface.

6. The method of measuring the optical characteristic of the multi-core optical fiber according to claim 5, wherein the multi-core optical fiber includes a glass fiber and a light-shielding coating resin coating an outer peripheral surface of the glass fiber.

7. The method of measuring the optical characteristic of the multi-core optical fiber according to any one of claims 2 to 6, wherein the camera is an image-processing support camera configured to calculate rotation angles of the multi-core optical fiber and the first optical fiber.

8. The method of measuring the optical characteristic of the multi-core optical fiber according to any one of claims 1 to 6, wherein the connecting further includes precisely aligning the first end surface and the first connection end surface by the first rotational fiber holder or the second rotational fiber holder after the butt-coupling the first end surface and the first connection end surface.

9. The method of measuring the optical characteristic of the multi-core optical fiber according to any one of claims 1 to 8, wherein the butt-coupling is performed by using a V-groove or a capillary filled with a refractive index matching agent.

10. The method of measuring the optical characteristic of the multi-core optical fiber according to any one of claims 1 to 9,
wherein the connecting includes
holding the multi-core optical fiber and aligning a rotation angle of the second end surface by using a third rotational fiber holder, and
holding the second optical fiber and aligning a rotation angle of the second connection end surface by using a fourth rotational fiber holder, and
wherein the butt-coupling the second end surface and the second connection end surface is performed by making the third rotational fiber holder and the fourth rotational fiber holder face each other in a state in which the second end surface has been aligned and the second connection end surface has been aligned.

11. The method of measuring the optical characteristic of the multi-core optical fiber according to any one of claims 1 to 9, wherein the second optical fiber is a single-core optical fiber including a core having a diameter equal to or more than a diameter of a circumcircle of a plurality of cores of the multi-core optical fiber.

12. The method of measuring the optical characteristic of the multi-core optical fiber according to any one of claims 1 to 9,
wherein the first optical fiber is a single-core optical fiber, and
wherein a distance between a central axis of the first optical fiber and a central axis of a core of the first optical fiber is equal to a distance between a central axis of the multi-core optical fiber and a central axis of each core of the multi-core optical fiber.

13. A measuring device of an optical characteristic of a multi-core optical fiber, comprising:
a light source configured to make measurement light incident on a first end surface of the multi-core optical fiber via a first optical fiber having a diameter equal to a diameter of the multi-core optical fiber;
a measuring instrument configured to measure light emitted from a second end surface of the multi-core optical fiber via a second optical fiber having a diameter equal to the diameter of the multi-core optical fiber;
a first rotational fiber holder configured to hold the multi-core optical fiber and rotationally align the first end surface of the multi-core optical fiber;
a second rotational fiber holder configured to hold the first optical fiber and rotationally align a first connection end surface of the first optical fiber to be connected to the multi-core optical fiber;
a first connection portion configured to butt-couple the first end surface rotationally aligned by the first rotational fiber holder and the first connection end surface rotationally aligned by the second rotational fiber holder; and
a second connection portion configured to butt-couple the second end surface of the multi-core optical fiber and the second optical fiber.

14. A method of measuring an optical characteristic of a multi-core optical fiber, the method comprising:
connecting a single-core optical fiber having a diameter equal to a diameter of the multi-core optical fiber and connected to a light source to a first end surface of the multi-core optical fiber, and connecting an optical fiber having a diameter equal to the diameter of the multi-core optical fiber and connected to a measuring instrument to a second end surface of the multi-core optical fiber; and
irradiating the first end surface with measurement light emitted from the light source via the single-core optical fiber, and measuring light emitted from the second end surface with the measuring instrument via the optical fiber,
wherein, in the connecting, the single-core optical fiber is connected to the multi-core optical fiber such that a core of the single-core optical fiber covers an entire core of a measurement target of the multi-core optical fiber at the first end surface.
